# EUROPÄISCHE PATENTSCHRIFT

(11) **EP 1 761 422 B1**
(45) Veröffentlichungstag und Bekanntmachung des Hinweises auf die Patenterteilung: **07.04.2010**
(21) Anmeldenummer: 06707319.7
(22) Anmeldetag: 28.02.2006
(51) Int. Cl.: B60T 1/087

(54) **RETARDER-ROTATIONSPUMPEN-BAUGRUPPE**
RETARDER-ROTARY PUMP ASSEMBLY
MODULE DE RALENTISSEUR-POMPE ROTATIVE

(30) Priorität: 02.03.2005 DE 102005009456
(43) Veröffentlichungstag der Anmeldung: 14.03.2007
(73) Patentinhaber: Voith Turbo GmbH & Co. KG, 89522 Heidenheim (DE)
(72) Erfinder: HEILINGER, Peter, 74589 Satteldorf (DE); KLEY, Markus, 73479 Ellwangen (DE); PITTIUS, Reinhold, 74564 Crailsheim (DE); VOGELSANG, Klaus, 74564 Crailsheim (DE)
(74) Vertreter: Dr. Weitzel & Partner
(86) Internationale Anmeldenummer: PCT/EP2006/001812
(87) Internationale Veröffentlichungsnummer: WO 2006/092264

(56) Entgegenhaltungen:
- EP-A- 0 428 311
- WO-A-98/35170
- DE-C1- 19 835 119
- DE-U1- 29 802 962

## Beschreibung

Die Erfindung betrifft eine Retarder-Rotationspumpen-Baugruppe, das heißt eine Vorrichtung, welche sowohl einen Retarder als auch eine Rotationspumpe aufweist. Die Rotationspumpe dient dem Verdichten eines Pumpmediums, welches zugleich das Arbeitsmedium des Retarders ist. Der Retarder dient dem hydrodynamischen Abbremsen der Rotorwelle, welche in der Regel in einer Triebverbindung mit einer Getriebeeingangswelle beziehungsweise Motorabtriebswelle (dann spricht man von einem Primärretarder) oder einer Getriebeausgangswelle (dann spricht man von einem Sekundärretarder) eines Kraftfahrzeugs steht.

In Kraftfahrzeugen werden solche Retarder-Rotationspumpen-Baugruppen, wie sie auch die vorliegende Erfindung in einer Ausführung umfasst, beispielsweise an der Motorfront des Antriebsmotors des Kraftfahrzeugs, welcher in der Regel als Verbrennungsmotor ausgeführt ist, angeordnet und durch die Kurbelwelle des Verbrennungsmotors angetrieben. Der Retarder ist somit ein Primärretarder, welcher dem verschleißfreien Abbremsen des Kraftfahrzeugs dient. Die Rotationspumpe ist beispielsweise als Wasserpumpe ausgebildet, welche das Kühlmedium im Fahrzeugkühlkreislauf, nämlich Wasser beziehungsweise ein Wassergemisch, in einem Kreislauf umwälzen soll. In diesem Fall ist der Retarder als Wasserretarder ausgeführt, das heißt, das Arbeitsmedium des Retarders ist das Kühlmedium des Kraftfahrzeugs, in der Regel Wasser mit einem Korrosionsschutzmittel und optional mit einem Gefrierschutzmittel.

Aufgrund des ständigen Antriebs der Wasserpumpe, das heißt der Rotationspumpe der erfindungsgemäßen Baugruppe, und zugleich des Retarders, der vorteilhaft mit der Rotationspumpe auf einer gemeinsamen Antriebswelle angeordnet ist, muss der Retarder immer dann, wenn keine hydrodynamische Bremsleistung gewünscht ist, in den Leerlauf versetzt werden, das heißt, der Arbeitsraum des Retarders muss derart entleert werden, dass einerseits die vom Retarder unerwünscht produzierte Verlustleistung möglichst gering ausfällt und andererseits eine ausreichende Kühlung des Retarders sichergestellt ist. Dies wird dadurch erreicht, dass der Retarder bis auf eine vorgegebene Restarbeitsmediummenge entleert wird, welche, wie dem Fachmann bekannt ist, zu einer Optimierung der Retarderverlustleistung im Leerlauf führt. Gleichzeitig wird eine vergleichsweise geringe Arbeitsmediummenge durch den Arbeitsraum des Retarders hindurchgeführt, um einen Wärmeeintrag, welcher durch die verbleibende Verlustleistung des Retarders erzeugt wird, sicher abzuleiten.

Im Bremsbetrieb hingegen, das heißt in einem solchen Betriebszustand, in dem der Retarder eine hydrodynamische Bremswirkung auf die Rotorwelle, welche insbesondere in einer Triebverbindung mit der Kurbelwelle steht, aufbringen soll, sollen hingegen Leckage- und Druckverluste minimiert werden, um eine optimale Leistungscharakteristik und hohe Füllungsgrade des Retarders zu gewährleisten.

Insbesondere, wenn das Arbeitsmedium und das Pumpmedium das Kühlmittel des Fahrzeugkühlkreislaufes ist, muss die Retarder-Rotations-Baugruppe zudem zuverlässig gegen einen Verlust von Kühlmedium abgedichtet sein, da ein solcher Kühlmediumverlust bekanntlich wenigstens zu einem Liegenbleiben des Kraftfahrzeugs, wenn nicht zu einer Zerstörung des Antriebsmotors oder angrenzender Bauteile führt.

Aus der obigen Beschreibung wird deutlich, dass an die Gestaltung der Arbeitsmediumführung in solchen Retarder-Rotations-Baugruppen beziehungsweise an die Abdichtung der arbeitsmediumführenden Bauteile besondere Anforderungen gestellt werden, welche einerseits mittels eines konstruktiv möglichst einfachen Aufbaus der Retarder-Rotationspumpen-Baugruppe erreicht werden sollen, wobei der Aufbau aber andererseits zugleich eine hohe Zuverlässigkeit gewährleisten soll. Bei bekannten Baugruppen ist es insbesondere immer wieder zu einem Arbeitsmediumverlust aufgrund des Versagens einer Wellendichtung, welche die Rotorwelle gegenüber dem Stator abdichtet, gekommen, ohne dass die Ursache für dieses Versagen bisher ausreichend geklärt werden konnte.

Zum Stand der Technik wird auf die folgenden Dokumente verwiesen:
EP 0428311 A
WO 98/65170 A
DE 198 35 119 C1

Die Merkmale, die aus dem erstgenannten Dokument bereits bekannt sind, sind im Oberbegriff von Anspruch 1 zusammengefasst.

Der Erfindung liegt die Aufgabe zugrunde, eine Retarder-Rotationspumpen-Baugruppe darzustellen, welche eine optimierte Arbeitsmediumführung im Hinblick auf die beiden Funktionen Pumpbetrieb (nur die Pumpe arbeitet während sich der Retarder im Leerlauf befindet) und Bremsbetrieb (die Pumpe und der Retarder arbeiten) ermöglicht und zugleich eine sichere Abdichtung gegen einen unerwünschten Austritt von Arbeitsmedium gewährleistet. Dabei sollen insbesondere der bauliche Aufwand und/oder bauliche Veränderungen gegenüber bekannten Ausführungen gering gehalten werden.

Die erfindungsgemäße Aufgabe wird durch eine Retarder-Rotationspumpen-Baugruppe mit den Merkmalen von Anspruch 1 gelöst. Die Unteransprüche beschreiben vorteilhafte und besonders zweckmäßige Ausgestaltungen der Erfindung.

Die erfindungsgemäße Retarder-Rotationspumpen-Baugruppe umfasst einen hydrodynamischen Retarder und eine Rotationspumpe, welche insbesondere axial nebeneinander, vorteilhaft auf einer gemeinsamen angetriebenen Welle, die insbesondere durch die Kurbelwelle eines Verbrennungsmotors angetrieben wird, angeordnet sind. Um eine leichte Montierbarkeit herzustellen ist, die Welle dabei vorteilhaft mehrteilig ausgebildet, entscheidend ist bei der genannten Ausführung nur, dass der Rotor des Retarders und das Pumpenlaufrad der Rotationspumpe gemeinsam mit derselben Drehzahl angetrieben werden.

Der Rotor des Retarders, welcher eine Rotorwelle und ein Rotorschaufelrad umfasst, steht wie üblich dem Stator des Retarders derart gegenüber, dass das Rotorschaufelrad und das Statorschaufelrad gemeinsam einen in der Regel torusförmigen Arbeitsraum miteinander ausbilden, welcher mit einem Arbeitsmedium befüllbar ist, mittels welchem Drehmoment vom Rotor auf den Stator übertragen wird und somit eine Abbremsung des Rotors erzielt wird.

Der Arbeitsraum wird beim Übergang in den Bremsbetrieb mit Arbeitsmedium, welches zugleich das Pumpmedium der Rotationspumpe ist, vorteilhaft mit Wasser oder einem Wassergemisch, befüllt, um die genannte Abbremsung zu erreichen. Im Nichtbremsbetrieb, das heißt im Leerlauf des Retarders, auch Pumpbetrieb genannt, da dann ausschließlich die Rotationspumpe, welche insbesondere als Wasserpumpe ausgebildet ist, arbeitet, wird hingegen der Arbeitsraum des Retarders bis auf eine vorgegebene Restarbeitsmediummenge entleert, um eine Drehmomentübertragung weitgehend oder vollständig zu verhindern. Zugleich wird im Nichtbremsbetrieb (Pumpbetrieb) ein vorgegebener Arbeitsmediumstrom gezielt durch den Arbeitsraum des Retarders geführt, um den Retarder zu kühlen und/oder Bauteile, insbesondere Dichtungen zwischen drehenden und stationären Teilen zu schmieren.

Die Rotationspumpe druckbeaufschlagt Pumpmedium, das der Rotationspumpe über einen Einlasskanal zugeführt wird, von einem Pumpeneingangsdruck auf einen Pumpenausgangsdruck, mit welchem Pumpenausgangsdruck das Pumpmedium dann über einen Auslasskanal aus der Rotationspumpe herausgefördert wird. Insbesondere übernimmt die Rotationspumpe ausschließlich oder ergänzend die Funktion der Wasserpumpe im Kühlmediumkreislauf des Kraftfahrzeugs, das heist die Rotationspumpe ist entweder die einzige oder eine von mehreren Wasserpumpen im Fahrzeugkühlkreislauf.

Um eine einfache und zugleich sichere Abdichtung des Arbeitsraums des Retarders gegenüber der Umgebung zu gewährleisten, und um den gewünschten kühlenden Arbeitsmediumstrom im Leerlaufbetrieb durch den Arbeitsraum des Retarders zu bewirken, sind Drehdurchführungen zwischen der Rotorwelle des Retarders und stationären Bauteilen, welche die Rotorwelle in Umfangsrichtung umschließen, axial beidseitig des Rotorschaufelrads ausgeführt, welche strömungsleitende Verbindungen ausbilden, die mit pumpmediumführenden Bereichen der Rotationspumpe derart verbunden sind, dass der Arbeitsraum des Retarders mit dem Pumpeneinlasskanal und/oder dem Pumpenauslasskanal in einer strömungsleitenden Verbindung steht. Insbesondere, wenn eine der beiden Drehdurchführungen eine erste strömungsleitende Verbindung ausbildet, welche den Arbeitsraum des Retarders mit dem Pumpenauslasskanal verbindet, und die andere Drehdurchführung eine zweite strömungsleitende Verbindung ausbildet, die den Arbeitsraum des Retarders ebenfalls mit dem Pumpenauslasskanal verbindet, kann ein Kühlstrom von Arbeitsmedium beziehungsweise Pumpmedium im Leerlauf des Retarders aus dem Pumpenauslasskanal in den Arbeitsraum und von dort weiter zum Pumpeneinlasskanal erreicht werden, wobei dieser Arbeitsmediumstrom aufgrund der Druckdifferenz des Pumpmediums in dem Pumpeneinlasskanal und dem Pumpenauslasskanal aufrecht erhalten wird. Die Rotationspumpe arbeitet somit im Pumpbetrieb, in welchem sie den Kühlmediumskreislauf im Fahrzeugkühlsystem aufrechterhält, zugleich als eine Kühlstrompumpe für den Retarder, die einen Arbeitsmediumkreislauf durch den Arbeitsraum des Retarders bewirkt, um den Retarder zu kühlen. Selbstverständlich ist es alternativ auch möglich, und wird gemäß dem weiter unten mit Bezug auf die Figuren dargestellten Ausführungsbeispiel bevorzugt, durch Verbinden des Arbeitsraumes des Retarders mittels zweier strömungsleitenden Verbindungen, die teilweise gemeinsam, beispielsweise in Form eines gemeinsamen Kanals oder Ringraums, ausgeführt sein können, mit dem Pumpenauslasskanal und durch Abführen des im Leerlaufbetrieb in den Arbeitsraum zugeführten Arbeitsmediums über den Retarderauslasskanal eine Kühlmediumströmung herzustellen. Ferner kann eine weitere Verbindung vorgesehen sein, durch welche ein Teil des über eine der beiden Verbindungen in Richtung des Arbeitsraum beförderten Arbeitmediums abgezweigt wird und zur Schmierung und/oder Kühlung der Wellendichtung gegenüber der Umgebung und/oder des zusätzlichen Sicherheitsdichtelements verwendet wird und anschließend wieder in den Pumpeneinlasskanal geführt wird.

Insbesondere, wenn die Rotationspumpe axial seitlich neben dem Retarder angeordnet ist, können ihre pumpmediumführenden Bereiche derart den Arbeitsraum des Retarders wenigstens teilweise umschließen, dass sie eine Abdichtung des Arbeitsraums in dieser Axialrichtung gegenüber der Umgebung darstellen. Im Retarderbetrieb, bei welchem insbesondere der Druck des Arbeitsmediums im Arbeitsraum des Retarders größer ist als der Druck in der Rotationspumpe, insbesondere als der Druck im Pumpenauslasskanal, strömt Arbeitsmedium aus dem Arbeitsraum des Retarders in die Rotationspumpe. Im Leerlaufbetrieb beziehungsweise Pumpbetrieb hingegen strömt, wie dargestellt, Pumpmedium beziehungsweise Arbeitsmedium aus der Rotationspumpe in den Arbeitsraum des Retarders.

Falls im Leerlauf des Retarders der Druck im Arbeitsraum unterhalb des Druckes im Pumpeneinlasskanal liegt, ist es nicht oder nur mit zusätzlichem Energieaufwand möglich, die oben beschriebene Kreislaufströmung vom Pumpenauslasskanal in den Arbeitsraum des Retarders und weiter in den Pumpeneinlasskanal auszubilden. Gemäß einer Ausführung der Erfindung, welche nachfolgend im einzelnen anhand der Figuren beschrieben wird, wird in einem solchen Fall im Leerlaufbetrieb beziehungsweise Pumpbetrieb eine Strömung von Pumpmedium aus der Rotationspumpe, insbesondere aus dem Pumpeneinlasskanal und dem Pumpenauslasskanal, in den Arbeitsraum des Retarders eingestellt. Eine Abführung dieses Arbeitsmediumstromes aus dem Arbeitsraum erfolgt über den Retarderauslasskanal, über welchen auch im Bremsbetrieb zumindest der Hauptteil von Arbeitsmedium aus dem Arbeitsraum abgeführt wird, und/oder im dampfförmigen Zustand über die Wellendichtung.

Erfindungsgemäß ist wenigstens eine der beiden strömungsleitenden Verbindungen, welche in Axialrichtung beidseitig des Rotorschaufelrads durch eine Drehdurchführung der Rotorwelle durch umschließende stationäre Bauteile hindurch ausgebildet werden, über eine Wellendichtung gegenüber der Umgebung abgedichtet. Diese Wellendichtung ist insbesondere bei der beschriebenen Anordnung der Rotationspumpe axial neben dem Retarder im Bereich des axialen Endes der Baugruppe angeordnet, welches dem axialen Ende, in dem die Rotationspumpe angeordnet ist, entgegengesetzt ist.

In beiden strömungsleitenden Verbindungen ist jeweils wenigstens ein Dichtelement eingesetzt, welches einen Druckabfall in dem durch diese strömungsleitende Verbindung strömenden Arbeitsmedium beziehungsweise eine Drosselung dieses Arbeitsmediums bewirkt. Über diesen Druckabfall beziehungsweise die Drosselung wird die Menge von Arbeitsmedium bestimmt, welche im Leerlaufbetrieb in den Arbeitsraum des Retarders einströmt beziehungsweise welche im Retarderbetrieb aus dem Arbeitsraum des Retarders über die strömungsleitende Verbindung ausströmt.

Aufgrund der Abdichtung von wenigstens einer der beiden strömungsleitenden Verbindungen mittels einer Wellendichtung gegenüber die Umgebung bestimmt das in dieser strömungsleitenden Verbindung angeordnete Dichtelement zugleich den Druck, welcher auf die Wellendichtung wirkt, beziehungsweise die Druckdifferenz, welche aufgrund des Umgebungsdruckes außerhalb der Wellendichtung über der Wellendichtung anliegt. Der Erfinder hat nun erkannt, dass die Hauptursache eines Ausfalls beziehungsweise einer Störung dieser Wellendichtung darin liegt, dass das mit Bezug auf die Strömungsrichtung von Arbeitsmedium in einer Reihenschaltung mit der Wellendichtung angeordnete Dichtelement in der strömungsleitenden Verbindung axial neben dem Rotorschaufelrad versagt und somit die gewünschte Drosselung beziehungsweise den gewünschten Druckabfall nicht mehr bewirkt, was dazu führt, dass die Wellendichtung mit einem Druck oberhalb ihres Auslegungsdruckes belastet wird. Erfindungsgemäß ist daher zwischen dem Dichtelement in der entsprechenden strömungsleitenden Verbindung, welche mittels der Wellendichtung gegenüber der Umgebung abgedichtet ist, ein zusätzliches Sicherheitsdichtelement vorgesehen, welches die Wellendichtung auch bei Ausfall des Dichtelements in der strömungsleitenden Verbindung sicher vor einer Überlastung schützt und somit die Sicherheit der erfindungsgemäßen Retarder-Rotationspumpen-Baugruppe gegen einen Austritt von Arbeitsmedium signifikant erhöht.

Um in jedem Betriebszustand eine Schmierung und/oder Kühlung der Wellendichtung zu gewährleisten, ist die Wellendichtung, welche den Raum in Strömungsrichtung hinter dem Sicherheitsdichtelement, d.h. den axial äußeren Bereich der Drehdurchführung, und damit mittelbar den Arbeitsraum gegen die Umgebung abdichtet, vorteilhaft derart ausgeführt, dass sie die strömungsleitende Verbindung in der Drehdurchführung nicht vollständig gegenüber der Umgebung abdichtet, sondern lediglich eine Abdichtung gegen einen Austritt von flüssigem Arbeitsmedium bewirkt und zugleich den Austritt von dampfförmigem Arbeitsmedium ermöglicht. Hierdurch wird eine Schmierung und/oder Kühlung der Wellendichtung erreicht.

Die Dichtelemente in den strömungsleitenden Verbindungen sowie das Sicherheitsdichtelement können vorteilhaft in Form von Kolbenringen ausgeführt sein, wohingegen die Wellendichtung vorteilhaft in Form einer Gleitringdichtung ausgeführt ist. Beide Dichtungsarten werden in den Figuren näher dargestellt. Die Kolbenringe sind vorteilhaft in der Rotorwelle beziehungsweise in von der Rotorwelle getragenen Bauteilen in Radialnuten eingesetzt und sind in Radialrichtung in diesen Radialnuten zumindest begrenzt beweglich. Hierdurch ist es möglich, dass die Kolbenringe ein Radialspiel zwischen der Rotorwelle und den umschließenden stationären Bauteilen federnd ausgleichen. Selbstverständlich können auch andere Dichtelemente, wie Wellendichtringe, Spitze-Spitze-Dichtungen, Labyrinthdichtungen und ähnliches alternativ oder zusätzlich vorgesehen sein.

Gemäß einer vorteilhaften Ausführung der Erfindung wird ein Ausfall beziehungsweise eine Störung des Dichtelements in der durch die Drehdurchführung ausgebildeten strömungsleitenden Verbindung, welche mittels der Wellendichtung gegenüber der Umgebung abgedichtet ist, mittels einer Drucküberwachung überwacht. Wenn ein Ausfall beziehungsweise eine Störung aufgrund eines ansteigenden Druckes hinter dem entsprechenden Dichtungselement erkannt wird, wird eine Fehlermeldung ausgegeben, die beispielsweise dem Fahrer eines Kraftfahrzeugs signalisiert, dass ein Werkstattbesuch mit dem Fahrzeug empfohlen wird. Insbesondere ist ein Drucksensor mit dem Raum hinter dem Dichtelement, vorteilhaft zwischen dem entsprechenden Dichtelement und dem Sicherheitsdichtelement, derart verbunden, dass er den Druckanstieg bei dem Ausfall oder der Störung des Dichtelements in der Drehdurchführung erfasst.

Die Erfindung soll nachfolgend anhand eines Ausführungsbeispiels, welches in den Figuren dargestellt ist, näher beschrieben werden.

Es zeigen:
- Figur 1: einen Axialschnitt durch einen Teilbereich einer erfindungsgemäß gestalteten Retarder-Rotationspumpen-Baugruppe mit dem Verlauf der Strömung im Retarderbetrieb beziehungsweise Bremsbetrieb;
- Figur 2: die Retarder-Rotationspumpen-Baugruppe aus der Figur 1 mit dem Verlauf der Strömung im Leerlaufbetrieb beziehungsweise Pumpbetrieb.

Anhand der Figuren soll zunächst der strukturelle Aufbau einer Ausführung einer erfindungsgemäßen Retarder-Rotationspumpen-Baugruppe beschrieben werden. Man erkennt den Retarder 10 mit dem Rotor 11 und dem Stator 12. Der Rotor umfasst eine Rotorwelle 11.1 und ein Rotorschaufelrad 11.2, wobei das letztere einem Statorschaufelrad 12.2 derart gegenübersteht, dass Rotorschaufelrad 11.2 und Statorschaufelrad 12.2 gemeinsam einen torusförmigen Arbeitsraum 13 ausbilden.

Die Baugruppe weist ein Gehäuse 7 auf, welches sowohl den Retarder 10 als auch die Rotationspumpe 20 vollständig umschließt. Im Einzelnen umfasst das Gehäuse 7 eine erste Gehäusehälfte 7.1, die mit einer zweiten Gehäusehälfte 7.2 verschraubt ist. Die Gehäusehälfte 7.1 trägt das Statorschaufelrad 12.2 und bildet zusammen mit dem Statorschaufelrad 12.2 einen Retardereinlasskanal 15 und einen Retarderauslasskanal 16 aus. Das Statorschaufelrad 12.2 ist dabei mittels eines Gewindes 14 in die erste Gehäusehälfte 7.1 eingeschraubt. Im Retarderbetrieb wird über den Retardereinlasskanal 15 Arbeitsmedium, und zwar der Hauptstrom des Arbeitsmediums, dem Arbeitsraum 13 zugeführt. Hierzu weist der Stator 12 beziehungsweise das Statorschaufelrad 12.2 eine Vielzahl von Einlassbohrungen 17 auf, durch welche das Arbeitsmedium aus dem Retardereinlasskanal 15 in das Zentrum des Arbeitsraums 13 einströmt.

Aus dem Arbeitsraum 13 strömt das Arbeitsmedium in den Retarderauslasskanal 16, über welchen somit im Retarderbetrieb beziehungsweise Bremsbetrieb der Hauptteil des Arbeitsmediums aus dem Retarder abgeführt wird.

Die zweite Gehäusehälfte 7.2 trägt eine Gehäuseschale 7.3, die zusammen mit dem Statorschaufelrad 12.2 und zum Teil auch der Gehäusehälfte 7.1 das Rotorschaufelrad 11.2 vollständig umschließt. Zugleich beschränkt die Gehäuseschale 7.3 zusammen mit der zweiten Gehäusehälfte 7.2 den pumpmediumführenden Bereich der Rotationspumpe 20, in welchem das Pumpenlaufrad 21 umläuft.

Wie man sieht, wird das Pumpenlaufrad 21 von der Rotorwelle 11.1 des Retarders getragen und beschleunigt Pumpmedium, das über den Pumpeneinlasskanal 22 zugeführt wird, radial nach außen in den Pumpenauslasskanal 23, wodurch zugleich das Pumpmedium mit Druck beaufschlagt wird. Im Pumpeneinlasskanal 22 weist das Pumpmedium einen Druck p_{VP} (Druck vor Pumpe) und im Auslasskanal 23 den Druck p_{NP} (Druck nach Pumpe), zum Beispiel 4 bar, auf.

Die Rotorwelle 11.1 ist beidseitig des Rotorschaufelrads 11.2 in jeweils einer Drehdurchführung 11.3 und 11.4 gegen stationäre Bauteile der Baugruppe abgedichtet. Die Drehdurchführung 11.3, welche auf der Statorseite mit und radial innerhalb des Statorschaufelrads 12.2 ausgebildet ist, bildet eine erste strömungsleitende Verbindung 1, wohingegen die Drehdurchführung 11.4 auf der Rotationspumpenseite, welche mit und radial innerhalb der Gehäuseschale 7.3 ausgeführt ist, eine zweite strömungsleitende Verbindung 2 ausbildet. Die erste strömungsleitende Verbindung 1 ist über eine Radialbohrung 8, eine Axialbohrung 9 in der Rotorwelle 11.1 und einen weitgehend in Radialrichtung verlaufenden Ringspalt zwischen der Gehäuseschale 7.3 und dem Pumpenlaufrad 21 mit dem Pumpenauslasskanal 23 strömungsleitend verbunden, während die zweite strömungsleitende Verbindung 2 über die Drehdurchführung und den weitgehend in Radialrichtung verlaufenden Ringspalt zwischen der Gehäuseschale 7.3 und dem Pumpenlaufrad 21 mit dem Pumpenauslasskanal 23 strömungsleitend verbunden ist.

In die erste strömungsleitende Verbindung 1 ist das Dichtelement 3 in Form eines in der Rotorwelle 11.1 radial beweglich eingesetzten Kolbenrings eingebracht, während in die zweite strömungsleitende Verbindung 2 ein Dichtelement 4 in Form eines gleichartig ausgeführten Kolbenrings eingebracht ist.

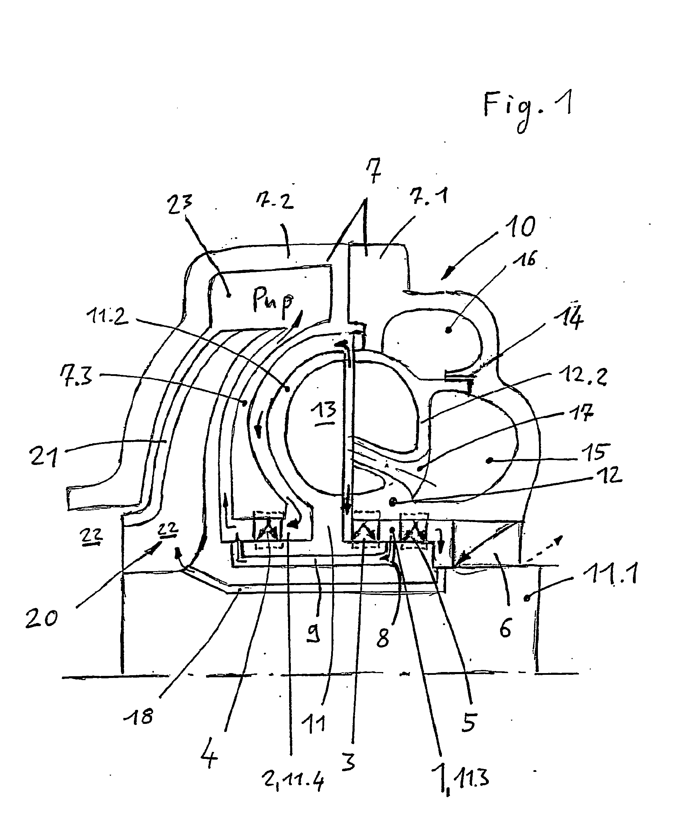

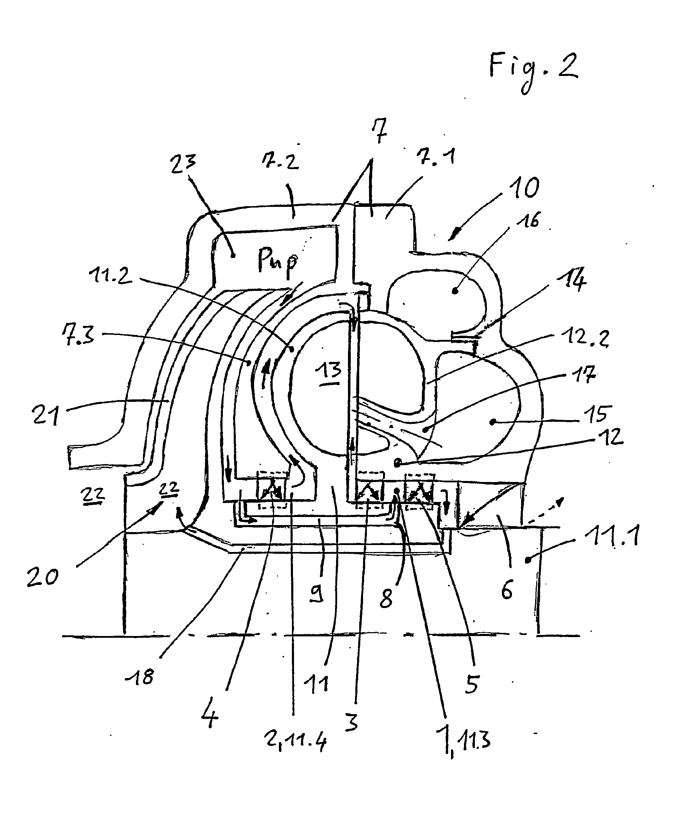

Aufgrund der gezeigten Strömungsführung stellt sich im Retarderbetrieb, das heißt im Bremsbetrieb, eine Strömung zwischen der Rotationspumpe 20 und dem Arbeitsraum des Retarders 13 ein, wie sie durch die Pfeile in der Figur 1 dargestellt ist, und im Pumpbetrieb beziehungsweise Leerlaufbetrieb eine solche, wie sie durch die Pfeile in der Figur 2 dargestellt ist.

Im Retarderbetrieb strömt somit Pumpmedium beziehungsweise Arbeitsmedium aus dem Arbeitsraum 13 des Retarders 10 in die Rotationspumpe 20, da der Druck im Arbeitsraum 13 größer als der Druck sowohl im Pumpeneinlasskanal 22 als auch Pumpenauslasskanal 23 ist. Im einzelnen tritt Arbeitsmedium radial innen aus dem Arbeitsraum 13 aus, durchströmt die erste strömungsleitende Verbindung 1, in die Radialbohrung 8 hinein, welche in der Axialbohrung 9 mündet, strömt durch die Axialbohrung 9 und in den Pumpenauslasskanal 23. Ein Teil des Arbeitsmediums, welches radial innen aus dem Arbeitsraum 13 austritt, strömt an der Radialbohrung 8 vorbei in Richtung der Wellendichtung 6, und zwar über das Sicherheitsdichtelement 5, welches ebenfalls entsprechend der Dichtelemente 3 und 4 als Kolbenring ausgebildet ist. Die Wellendichtung 6 lässt eine Teil des Arbeitsmediums als dampfförmiges Arbeitsmedium, das heißt Wasserdampf, welches aus der Strömung entlang des Sicherheitsdichtelementes 5 resultiert, in die Umgebung ab, wodurch die Wellendichtung 6, die als Gleitringdichtung ausgebildet ist, an ihrer Dichtfläche geschmiert und gekühlt wird. Eine solche Gleitringdichtung zeichnet sich dadurch aus, dass sie einen berührenden Eingriff zwischen den beiden gegeneinander abgedichteten Bauteilen, somit zwischen der Rotorwelle 11.1 und dem Gehäuse 7, insbesondere der ersten Gehäusehälfte 7.1, herstellt. Der restliche Teil des Arbeitsmediums, welches zuvor über das Sicherheitsdichtelement 5 geströmt ist und nicht über die Wellendichtung 6 an die Umgebung abgeleitet wird, wird über eine weitere Verbindung, die dritte strömungsleitende Verbindung 18, die beispielsweise in Form wenigstens einer weiteren Axialbohrung in der Rotorwelle 11.1 ausgebildet ist, und insbesondere auf demselben oder annähernd demselben Radius wie die Axialbohrung 9 liegt und in Umfangsrichtung der Rotorwelle 11.1 zu dieser versetzt, beispielsweise alternierend mit mehreren Axialbohrungen 9, angeordnet ist, zurück in den Pumpeneinlasskanal 22 geleitet.

Arbeitsmedium, welches radial nach außen zwischen dem Rotorschaufelrad 11.2 und dem Statorschaufelrad 12.2 aus dem Arbeitsraum 13 ausströmt, strömt auf der Außenseite entlang des Rotorschaufelrads 11.2, das heißt durch den Ringspalt zwischen dem Rotorschaufelrad 11.2 und der Gehäuseschale 7.3, in die Drehdurchführung 11.4 und somit die zweite strömungsleitende Verbindung 2 über das Dichtelement 4 hinweg. Nach dem Durchtritt durch die Drehdurchführung 11.4 strömt dieses Arbeitsmedium entlang der Außenseite der Gehäuseschale 7.3, d. h. durch den Ringspalt zwischen der Gehäuseschale 7.3 und dem Pumpenlaufrad 21, in den Pumpenauslasskanal 23.

Im Pumpbetrieb, das heißt dann, wenn sich der Retarder 10 im Leerlauf befindet, siehe die Figur 2, ist die Strömungsrichtung des Arbeitsmediums gegenüber der Figur 1 umgekehrt, das heißt das Arbeitsmedium strömt aus dem Pumpenauslasskanal 23 über die genannten Verbindungen radial von außen in den Arbeitsraum 13 und ferner aus dem Pumpenauslasskanal 23 über die Axialbohrung 9, die Radialbohrung 8, die erste Drehdurchführung 11.3 radial von innen in den Arbeitsraum 13. Einzig die Strömungsrichtung von Arbeitsmedium aus der ersten Drehdurchführung 11.3 über das Sicherheitsdichtelement 5 und teilweise über die Wellendichtung 6 in die Umgebung (im dampfförmigen Zustand) sowie die weitere Axialbohrung in den Pumpeneinlasskanal 22 bleibt unverändert gleich der Strömungsrichtung im Retarderbetrieb.

Die gezeigten Dichtelemente 3 und 4 in den Drehdurchführungen, sowie das Sicherheitsdichtelement 5 und die Wellendichtung 6 sind insbesondere die einzigen Dichtungen in der beschriebenen Strömungsführung, d.h. zumindest entlang der Abdichtung der Rotorwelle 11.1 gegenüber den stationären Bauteilen im Bereich radial innerhalb des Retarders 10.

Alle Dichtelemente, das heißt das Dichtelement 3, das Dichtelement 4, das Sicherheitsdichtelement 5 sowie die Wellendichtung 6 sind derart ausgeführt, dass sie axiale und radiale Wellenbewegungen sowie Drehschwingungen und Schiefstellungen der Welle beherrschen. Die Wellendichtung 6 ist insbesondere für eine maximale Druckbelastung von 2 bar (innen zu außen) ausgelegt. Die Dichtelemente 3 und 4 lassen insbesondere eine maximale Leckage von 5 Litern pro Minute zu.

## Patentansprüche

1. Retarder-Rotationspumpen-Baugruppe
1.1 mit einem hydrodynamischen Retarder (10), umfassend einen beschaufelten Rotor (11) und einen beschaufelten Stator (12);
1.2 der beschaufelte Rotor (11) und der beschaufelte Stator (12) bilden miteinander einen torusförmigen Arbeitsraum (13) aus, der zur Übertragung von Drehmoment von dem Rotor (11) auf den Stator (12) im Retarderbetrieb mit einem Arbeitsmedium befüllbar ist und zur Vermeidung einer Drehmomentübertragung im Leerlaufbetrieb bis auf eine vorgegebene Restarbeitsmediummenge entleerbar ist;
1.3 mit einer Rotationspumpe (20), die ein Pumpenlaufrad (21) aufweist, um ein Pumpmedium von einem Pumpeneingangsdruck (p_{VP}) auf einen Pumpenausgangsdruck (p_{NP}) zu fördern;
1.4 wobei das Pumpmedium der Rotationspumpe (20) zugleich das Arbeitsmedium des Retarders (10) ist;
1.5 die Rotationspumpe (20) weist einen Einlasskanal (22) zum Zuführen von Pumpmedium mit Pumpeneingangsdruck (p_{VP}) und einen Auslasskanal (23) zum Abführen von Pumpmedium mit Pumpenausgangsdruck (p_{NP}) auf; **gekennzeichnet durch** die folgenden Merkmale:
1.6 der Rotor (11) weist eine Rotorwelle (11.1) auf, die ein Rotorschaufelrad (11.2) trägt, und die in Axialrichtung beidseits des Rotorschaufelrades (11.2) über eine Drehdurchführung (11.3, 11.4) mit stationären Bauteilen der Baugruppe jeweils eine strömungsleitende Verbindung (1, 2) ausbildet, welche den Arbeitsraum (13) des Retarders (10) mit dem Pumpeneinlasskanal (22) und/oder dem Pumpenauslasskanal (23) verbindet;
1.7 in jeder der strömungsleitenden Verbindungen (1, 2) ist jeweils wenigstens ein Dichtelement (3, 4) vorgesehen, das einen vorbestimmten Druckabfall in dem **durch** die Verbindung (1, 2) strömenden Arbeitsmedium bewirkt;
1.8 wenigstens eine der beiden strömungsleitenden Verbindungen (1) ist gegenüber der Umgebung zumindest gegen den Austritt von flüssigem Arbeitsmedium mittels einer Wellendichtung (6) abgedichtet; wobei
1.9 zwischen dem Dichtelement der entsprechenden strömungsleitenden Verbindung (1) und der Wellendichtung (6) ein zusätzliches Sicherheitsdichtelement (5) vorgesehen ist, um bei einem Ausfall des Dichtelements (3) die Wellendichtung (6) vor einer Überlast zu schützen.

2. Retarder-Rotationspumpen-Baugruppe gemäß Anspruch 1, **dadurch gekennzeichnet, dass** der Pumpenauslasskanal (23) über eine erste strömungsleitende Verbindung (1) mit einem ersten Dichtelement (3) mit dem Arbeitsraum (13) verbunden ist, und der Pumpenauslasskanal (23) ferner über eine zweite strömungsleitende Verbindung (2) mit einem zweiten Dichtelement (4) mit dem Arbeitsraum (13) verbunden ist, und insbesondere eine dritte strömungsleitende Verbindung (18) vorgesehen ist, welche an der ersten strömungsleitenden Verbindung (1) oder der zweiten strömungsleitenden Verbindung (2) derart angeschlossen ist, dass ein Teil des durch jene strömungsleitenden Verbindung (1, 2) strömenden Arbeitsmediums in den Pumpeneinlasskanal (22), insbesondere sowohl im Retarderbetrieb als auch im Leerlaufbetrieb, abgeführt wird.

3. Retarder-Rotationspumpen-Baugruppe gemäß Anspruch 2, **dadurch gekennzeichnet, dass** die erste strömungsleitende Verbindung (1) gemäß der Merkmale 1.8 und 1.9 gegenüber der Umgebung abgedichtet ist.

4. Retarder-Rotationspumpen-Baugruppe gemäß einem der Ansprüche 1 bis 3, **dadurch gekennzeichnet, dass** das Sicherheitsdichtelement (5) eine unvollständige Abdichtung ausbildet, um eine Arbeitsmediumströmung zu der Wellendichtung (6) zu ermöglichen.

5. Retarder-Rotationspumpen-Baugruppe gemäß Anspruch 4, **dadurch gekennzeichnet, dass** die Wellendichtung (6) derart ausgeführt ist, dass sie eine vorgegebene Menge von dampfförmigem Arbeitsmedium an die Umgebung durchlässt.

6. Retarder-Rotationspumpen-Baugruppe gemäß einem der Anspruch 1 bis 5, **dadurch gekennzeichnet, dass** die Dichtelemente (3, 4) in den strömungsleitenden Verbindungen (1, 2) und das Sicherheitsdichtelement (5) in Form von Kolbenringen ausgeführt sind, welche in Radialrichtung zumindest begrenzt beweglich in der Rotorwelle (11.1) eingesetzt sind.

7. Retarder-Rotationspumpen-Baugruppe gemäß einem der Ansprüche 1 bis 6, **dadurch gekennzeichnet, dass** die Wellendichtung (6) in Form einer Gleitringdichtung ausgeführt ist.

8. Retarder-Rotationspumpen-Baugruppe gemäß einem der Ansprüche 1 bis 7, **dadurch gekennzeichnet, dass** die Rotationspumpe (20) in Axialrichtung neben dem Retarder (10) angeordnet ist und den Arbeitsraum (3) mit ihren pumpmediumführenden Kanälen derart wenigstens teilweise umschließt, dass sie jegliches Arbeitsmedium aus dem Arbeitsraum (13), welches im Bremsbetrieb axial in Richtung der Rotationspumpe (20) strömt, aufnimmt, oder im Leerlaufbetrieb eine vorbestimmte Arbeitsmediummenge für eine Kühlströmung in den Arbeitsraum (13) zur Verfügung stellt, wobei die Rotationspumpe (20) an einem ersten axialen Ende der Baugruppe angeordnet ist, das einem zweiten axialen Ende, in welchem die Wellendichtung (6) angeordnet ist, entgegengesetzt ist.

9. Retarder-Rotationspumpen-Baugruppe gemäß Anspruch 8, **dadurch gekennzeichnet, dass** der Rotor (11) und das Pumpenlaufrad (21) von einem gemeinsamen Gehäuse (7) umschlossen werden, welches zusätzlich den Stator (22) trägt oder integral ausbildet.

10. Retarder-Rotationspumpen-Baugruppe gemäß einem der Ansprüche 8 oder 9, **dadurch gekennzeichnet, dass** der Rotor (11) und das Pumpenlaufrad (21) von einer gemeinsamen Welle getragen und angetrieben werden.

11. Retarder-Rotationspumpen-Baugruppe gemäß einem der Ansprüche 1 bis 10, **dadurch gekennzeichnet, dass** an der strömungsleitenden Verbindung (1), welche mittels der Wellendichtung (6) gegenüber der Umgebung abgedichtet ist, ein Drucksensor wenigstens mittelbar angeschlossen ist, um einen Druckanstieg aufgrund eines Ausfalls des Dichtelements (3) zu erfassen.

12. Retarder-Rotationspumpen-Baugruppe gemäß einem der Ansprüche 1 bis 11, **dadurch gekennzeichnet, dass** das Arbeitsmedium Wasser oder ein Wassergemisch ist.

## Claims

1. A retarder-rotation pump assembly;
1.1 with a hydrodynamic retarder (10), comprising a bladed rotor (11) and a bladed stator (12);
1.2 the bladed rotor (11) and the bladed stator (12) jointly form a toroidal working chamber (13) which can be filled with a working medium for transferring torque from the rotor (11) to the stator (12) in retarder operation and can be discharged up to a predetermined residual quantity of working medium for avoiding the transfer of torque in idle operation;
1.3 with a rotation pump (20) which comprises a pump wheel (21) in order to convey a pump medium from a pump input pressure (p_{VP}) to a pump output pressure (p_{NP});
1.4 with the pump medium of the rotation pump (20) simultaneously being the working medium of the retarder (10);
1.5 the rotation pump (20) comprises an inlet duct (22) for supplying pump medium with a pump input pressure (p_{VP}) and an outlet duct (23) for discharging pump medium with a pump output pressure (p_{NP}); **characterized by** the following features:
1.6 the rotor (11) carries a rotor shaft (11.1) which carries a rotor blade wheel (11.2) and which each forms a flow-conducting connection (1, 2) in the axial direction on both sides of the rotor blade wheel (11.2) via a rotary passage (11.3, 11.4) with stationary components of the assembly, which connection connects the working chamber (13) of the retarder (10) with the pump inlet duct (22) and/or the pump outlet duct (23);
1.7 at least one sealing element (3, 4) is provided in each of the flow-conducting connections (1, 2), which sealing element causes a predetermined pressure drop in the working medium flowing through the connection (1,2);
1.8 at least one of the two flow-conducting connections (1) is sealed against the ambient environment by means of a shaft seal (6) at least against the leakage of fluid working medium, with
1.9 an additional safety sealing element (5) being provided between the sealing element of the respective flow-conducting connection (1) and the shaft seal (6) in order to protect the shaft seal (6) against overloading in case of a failure of the sealing element (3).

2. A retarder-rotation pump assembly according to claim 1, **characterized in that** the pump outlet duct (23) is connected via a first flow-conducting connection (1) with a first sealing element (3) with the working chamber (13) and the pump outlet duct (23) is further connected via a second flow-conducting connection (2) with a second sealing element (4) with the working chamber (13), and especially a third flow-conducing connection (18) is provided which is connected to the first flow-conducting connection (1) or the second flow-conducting connection (2) in such a way that a portion of the working medium flowing through the flow-conducting connection (1, 2) is discharged into the pump inlet duct (22), especially both in retarder operation as well as idle operation.

3. A retarder-rotation pump assembly according to claim 2, **characterized in that** the first flow-conducting connection (1) according to the features 1.8 and 1.9 is sealed against the ambient environment.

4. A retarder-rotation pump assembly according to one of the claims 1 to 3, **characterized in that** the safety sealing element (5) forms an incomplete seal in order to enable a working medium flow to the shaft seal (6).

5. A retarder-rotation pump assembly according to claim 4, **characterized in that** the shaft seal (6) is arranged in such a way that it allows passage of a predetermined quantity of vaporous working medium to the ambient environment.

6. A retarder-rotation pump assembly according to one of the claims 1 to 5, **characterized in that** the sealing elements (3, 4) in the flow-conducting connections (1, 2) and the safety sealing element (5) are arranged in the form of piston rings which are inserted in the radial direction in the rotor shaft (11.1) in an at least limited movable manner.

7. A retarder-rotation pump assembly according to one of the claims 1 to 6, **characterized in that** the shaft seal (6) is arranged in the form of a floating ring seal.

8. A retarder-rotation pump assembly according to one of the claims 1 to 7, **characterized in that** the rotation pump (20) is arranged in the axial direction adjacent to the retarder (10) and encloses the working chamber (3) with its pump-medium-guiding ducts at least partly in such a way that it receives any working medium from the working chamber (13) which flows in braking operation axially in the direction of the rotation pump (20) or provides in idle operation a predetermined quantity of working medium for a cooling flow in the working chamber (13), with the rotation pump (20) being arranged at a first axial end of the module which is opposite of a second axial end in which the shaft seal (6) is arranged.

9. A retarder-rotation pump assembly according to claim 8, **characterized in that** the rotor (11) and the pump blade wheel (21) is enclosed by a common housing (7) which additionally carries the stator (22) or integrally forms the same.

10. A retarder-rotation pump assembly according to one of the claims 8 or 9, **characterized in that** the rotor (11) and the pump blade wheel (21) are carried and driven by a common shaft.

11. A retarder-rotation pump assembly according to one of the claims 1 to 10, **characterized in that** a pressure sensor is connected at least indirectly to the flow-conducting connection (1) which is sealed by means of the shaft seal (6) against the ambient environment in order to detect a rise in pressure as a result of a failure of the sealing element (3).

12. A retarder-rotation pump assembly according to one of the claims 1 to 11, **characterized in that** the working medium is water or a water mixture.

## Revendications

1. Groupe de retardateur et pompe rotative
1.1 avec un retardateur hydrodynamique (10) comprenant un rotor muni de pales (11) et un stator muni de pales (12) ;
1.2 le rotor muni de pales (11) et le stator muni de pales (12) forment ensemble un espace de travail toroïdal (13) qui peut être rempli d'un fluide de travail pour la transmission du couple du rotor (11) au stator (12) en mode retardateur et peut être vidé pour empêcher une transmission du couple en marche à vide jusqu'à une quantité résiduelle prédéterminée de fluide de travail ;
1.3 avec une pompe rotative (20) qui possède une roue de pompe (21) pour transférer un fluide pompé d'une pression d'entrée de la pompe (p_{VP}) à une pression de sortie de la pompe (p_{NP}) ;
1.4 dans lequel le fluide pompé par la pompe rotative (20) est en même temps le fluide de travail du retardateur (10) ;
1.5 la pompe rotative (20) présente un canal d'entrée (22) pour amener le fluide pompé sous la pression d'entrée de la pompe (p_{VP}) et un canal de sortie (23) pour évacuer le liquide pompé sous la pression de sortie de la pompe (p_{NP}) ; **caractérisé en ce que** :
1.6 le rotor (11) possède un arbre de rotor (11.1) qui porte une roue à aubes de rotor (11.2) et qui forme dans le sens axial de part et d'autre de la roue à aube de rotor (11.2), à travers une traversée pivotante (11.3, 11.4), une communication acheminant le flux (1, 2) avec les composants stationnaires du groupe, qui relie l'espace de travail (13) du retardateur (10) au canal d'entrée de pompe (22) et/ou au canal de sortie de pompe (23) ;
1.7 il est prévu dans chacune des communications acheminant le flux (1, 2) au moins un élément d'étanchéité (3, 4) qui réalise une baisse de pression prédéterminée dans le fluide de travail circulant dans la communication (1, 2) ;
1.8 au moins une des deux communications acheminant le flux (1) est rendue étanche vis-à-vis de l'environnement au moins pour empêcher la sortie de fluide de travail liquide au moyen d'un joint d'arbre (6),
1.9 un élément d'étanchéité de sécurité (5) supplémentaire étant prévu entre l'élément d'étanchéité de la communication acheminant le flux (1) en question et le joint d'arbre (6) pour protéger le joint d'arbre (6) d'une surcharge en cas de défaillance de l'élément d'étanchéité (3).

2. Groupe de retardateur et pompe rotative selon la revendication 1, **caractérisé en ce que** le canal de sortie de pompe (23) est relié par une première communication acheminant le flux (1) munie d'un premier élément d'étanchéité (3) à l'espace de travail (13), et le canal de sortie de pompe (23) est en outre relié par une deuxième communication acheminant le flux (2) munie d'un deuxième élément d'étanchéité (4) à l'espace de travail (13), et il est prévu en particulier une troisième communication acheminant le flux (18) qui est raccordée à la première communication acheminant le flux (1) ou à la deuxième communication acheminant le flux (2) de telle manière qu'une partie du fluide de travail circulant dans cette communication acheminant le flux (1, 2) soit évacuée dans le canal d'entrée de pompe (22), en particulier aussi bien en mode de retardateur qu'en marche à vide.

3. Groupe de retardateur et pompe rotative selon la revendication 2, **caractérisé en ce que** la première communication acheminant le flux (1) est rendue étanche vis-à-vis de l'environnement selon les caractéristiques 1.8 et 1.9.

4. Groupe de retardateur et pompe rotative selon l'une des revendications 1 à 3, **caractérisé en ce que** l'élément d'étanchéité de sécurité (5) réalise une étanchéité incomplète afin de permettre un écoulement de fluide de travail vers le joint d'arbre (6).

5. Groupe de retardateur et pompe rotative selon la revendication 4, **caractérisé en ce que** le joint d'arbre (6) est réalisé de façon à laisser passer une quantité prédéterminée de fluide de travail sous forme de vapeur vers l'environnement.

6. Groupe de retardateur et pompe rotative selon l'une des revendications 1 à 5, **caractérisé en ce que** les éléments d'étanchéité (3, 4) dans les communications acheminant le flux (1, 2) et l'élément d'étanchéité de sécurité (5) sont réalisés sous la forme de joints de piston qui sont insérés dans l'arbre de rotor (11.1) avec possibilité de mouvement au moins limité dans le sens radial.

7. Groupe de retardateur et pompe rotative selon l'une des revendications 1 à 6, **caractérisé en ce que** le joint d'arbre (6) est réalisé sous la forme d'une garniture mécanique d'étanchéité.

8. Groupe de retardateur et pompe rotative selon l'une des revendications 1 à 7, **caractérisé en ce que** la pompe rotative (20) est disposée à côté du retardateur (10) dans le sens axial et entoure au moins partiellement l'espace de travail (3) avec ses canaux acheminant le fluide pompé, de telle façon qu'elle recueille tout le fluide de travail sortant de l'espace de travail (13) qui s'écoule dans le sens axial en direction de la pompe rotative (20) en mode de freinage, ou fournisse en marche à vide une quantité prédéterminée de fluide de travail pour un flux de refroidissement dans l'espace de travail (13), la pompe rotative (20) étant disposée à une première extrémité axiale du groupe qui est opposée à une deuxième extrémité axiale dans laquelle est disposé le joint d'arbre (6).

9. Groupe de retardateur et pompe rotative selon la revendication 8, **caractérisé en ce que** le rotor (11) et la roue de pompe (21) sont entourés par un carter (7) commun qui porte en outre le stator (22) ou forme celui-ci d'un seul tenant.

10. Groupe de retardateur et pompe rotative selon l'une des revendications 8 ou 9, **caractérisé en ce que** le rotor (11) et la roue de pompe (21) sont portés et entraînés par un arbre commun.

11. Groupe de retardateur et pompe rotative selon l'une des revendications 1 à 10, **caractérisé en ce qu'**un capteur de pression est raccordé au moins indirectement à la communication acheminant le flux (1) qui est rendue étanche vis-à-vis de l'environnement au moyen du joint d'arbre (6) pour capter une augmentation de la pression résultant d'une défaillance de l'élément d'étanchéité (3).

12. Groupe de retardateur et pompe rotative selon l'une des revendications 1 à 11, **caractérisé en ce que** le fluide de travail est de l'eau ou un mélange à base d'eau.
